Europäisches Patentamt

European Patent Office

Office européen des brevets

(11) Veröffentlichungsnummer: **0 269 792**
**B1**

(12) # EUROPÄISCHE PATENTSCHRIFT

(45) Veröffentlichungstag der Patentschrift:
16.05.90

(51) Int. Cl.⁵: **F16L 47/00**, F16L 41/02

(21) Anmeldenummer: **87112010.1**

(22) Anmeldetag: **19.08.87**

(54) **Rohrverbindungsteil aus Kunststoff.**

(30) Priorität: **31.10.86 CH 4331/86**

(43) Veröffentlichungstag der Anmeldung:
**08.06.88 Patentblatt 88/23**

(45) Bekanntmachung des Hinweises auf die Patenterteilung:
**16.05.90 Patentblatt 90/20**

(84) Benannte Vertragsstaaten:
**AT BE CH DE ES FR GB GR IT LI LU NL SE**

(56) Entgegenhaltungen:
**EP-A- 0 057 000**
**DE-B- 2 223 529**
**US-A- 1 960 557**
**US-A- 2 670 224**

(73) Patentinhaber: **GEORG FISCHER AKTIENGESELLSCHAFT, Mühlentalstrasse 105, CH-8201 Schaffhausen(CH)**

(72) Erfinder: **Wermelinger Jörg, Hiltibergstrasse 44B, CH-5442 Fislisbach(CH)**

**Beschreibung**

Die Erfindung betrifft ein Rohrverbindungsteil aus Kunststoff, wie es im Oberbegriff von Anspruch 1 gekennzeichnet ist.

Durch die DE-B 2 223 529 sind Rohrverbindungsteile der eingangs genannten Art bekannt geworden, welche im Mittelbereich und am Übergang zu den Muffen an der Aussenkontur besonders verstärkt ausgebildet sind. Durch die am ganzen Aussenumfang angeordnete Verstärkung ist in verschiedenen Bereichen mehr Material vorhanden, als für die Festigkeit des Formteiles erforderlich ist. Dies ergibt grössere Inhomogenitäten des Spritzmaterials, was wiederum die Festigkeit des Formteiles beeinträchtigt. Die in dieser Schrift gezeigten Formteile sind nicht so ausgebildet, dass sie nur in den kritischen Zonen Verstärkungen aufweisen, so dass für deren Herstellung mehr Material als unbedingt notwendig dafür erforderlich ist.

Auch bei dem in der US-A 2 670 224 gezeigten T-Stück aus Metall verläuft die Aussenkontur im Mittelbereich sowie im Bereich der beiden gegenüberliegenden Muffen zu der zentrisch zu den Muffenachsen kreisrunden Innenkontur exzentrisch. Hierbei entstehen auf der zur Abzweigmuffe gerichteten Seite wesentlich grössere Wandstärken, als dies bei aus Kunststoff hergestellten Formteilen für eine gleichmässige Spannungsverteilung erforderlich wäre.

Aufgabe der vorliegenden Erfindung ist die Schaffung von Formteilen aus Kunststoff der eingangs genannten Art, welche derart gestaltet sind, dass die erforderliche Festigkeit bei möglichst ausgeglichener Beanspruchung aller Zonen des Formteiles mit einem möglichst geringen Materialaufwand erreicht wird, wobei die Aussenkontur eine möglichst glatte Form aufweisen soll und das Formteil zur Erreichung homogenen Materials spritzgussgerecht ausgebildet sein muss.

Erfindungsgemäss wird dies durch die kennzeichnenden Merkmale von Anspruch 1 gelöst.

Besonders vorteilhafte Ausgestaltungen der Erfindung sind in den abhängigen Ansprüchen gekennzeichnet.

Dadurch, dass die Innenkontur durch zwei zur Aussenkontur und zueinander exzentrisch verlaufende, an den Innenkonturpartien im Mittelbereich des Formteiles gebildet wird, ist mit weniger Materialaufwand eine partielle Verstärkung an der kritischen Stelle möglich, als wenn der Aussenumfang verstärkt würde. Gleichzeitig verringert sich die innere Oberfläche, so dass bei gleichem Mediums-Innendruck die Belastung des Formteiles geringer wird, was wiederum eine geringere Verstärkung erfordert und zu einem homogeneren Spritzgussteil führt. Durch die exzentrisch zur Aussenkontur verlaufende Innenkontur im Mittelteil wird ein fliessender Materialübergang von der dünnsten Wandstärke bis zur dicksten Wandstärke erreicht, wodurch Teile mit geringen inneren Eigenspannungen im Spritzgussverfahren herstellbar sind.

Die Erfindung ist in beiliegenden Zeichnungen in Ausführungsbeispielen dargestellt und nachfolgend beschrieben.

Es zeigen:

Fig. 1 ein T-förmiges Rohrverbindungsteil im Schnitt,
Fig. 2 eine halbseitige Draufsicht von Fig. 1,
Fig. 3 einen Schnitt entlang der Linie III-III von Fig. 1,
Fig. 4 ein winkelförmiges Rohrverbindungsteil im Schnitt und
Fig. 5 eine Draufsicht von Fig 4.

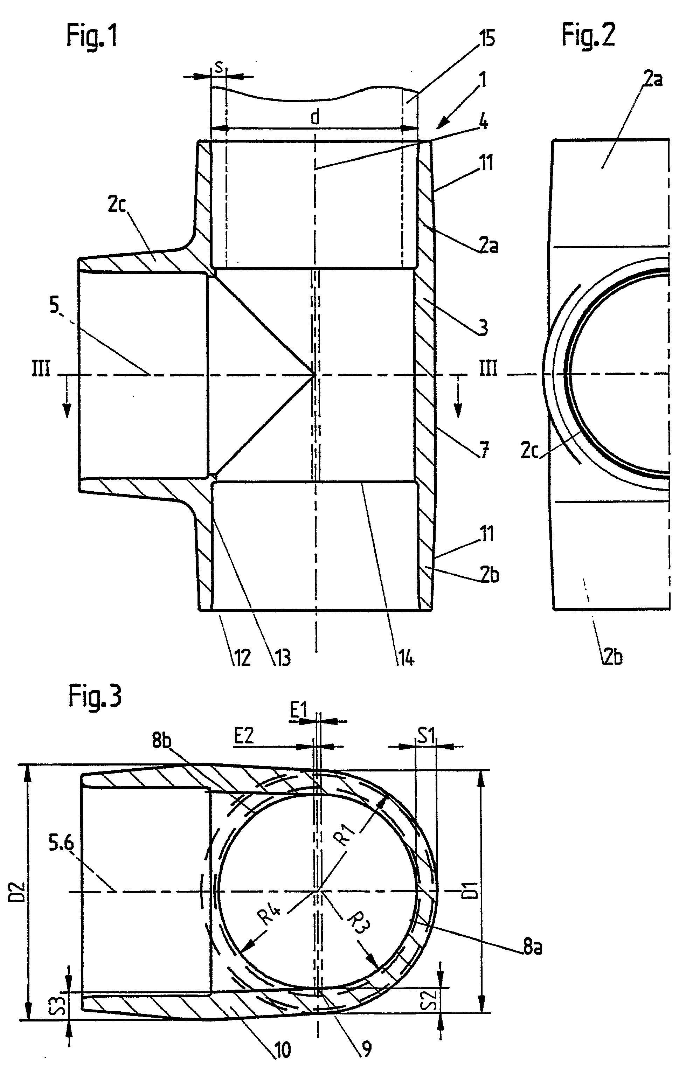

Die Fig. 1 bis 3 zeigen ein als T-förmiges Abzweigstück 1 ausgebildetes Rohrverbindungsteil, das aus einem beliebigen Kunststoff bestehen kann.

Das Abzweigstück 1 weist zwei gegenüberliegende identische Muffen 2a, 2b und eine davon abzweigende Muffe 2c auf, wobei alle drei Muffen durch einen Mittelbereich 3 miteinander verbunden sind. Die beiden Muffen 2a, 2b sind zentrisch zu einer Achse 4 und die Muffe 2c zentrisch zu einer dazu rechtwinklig verlaufenden Achse 5 angeordnet, wobei eine durch die Achse 4 und 5 gehende Ebene mit 6 bezeichnet wird.

Wie aus Fig. 3 ersichtlich, ist die Aussenkontur 7 des Mittelbereiches 3 im Querschnitt kreisförmig mit einem Radius R1 ausgebildet, wobei der Radiusmittelpunkt mit der Achse 4 zusammenfällt.

Die Innenkontur 8 weist zwei zur Aussenkontur exzentrisch angeordnete Innenkontur-Partien 8a und 8b auf, deren Radien R3 und R4 gleich gross sind. Die Radiusmittelpunkte liegen in der Ebene 6 beidseits der Achse 4 mit unterschiedlichen Distanzen, wobei die Exzentrizität E1 des von der abzweigenden Muffe 2c abgewendeten Radius R3 grösser ist als die Exzentrizität E2 von Radius R4, so dass die beiden Innenkontur-Partien 8a, 8b unterschiedlich exzentrisch angeordnet sind.

Die Wandstärke S1 des Mittelbereiches 3 an der durch die Ebene 6 gehenden Stelle ist am schwächsten und steigt dann kontinuierlich bis zur Wandstärke S2 an, welche der Radiusdifferenz R1-R3 entspricht. Das Verhältnis S2/S1 beträgt vorzugsweise 1,2 bis 1,3.

Die Verbindungsfläche 9 zwischen den durch die Radien R3 und R4 gebildeten Innenkontur-Partien 8a, 8b wird durch eine ebene, schmale Fläche gebildet.

Das Verbindungsteil 10 der Abzweigmuffe 2c und dem Mittelbereich 3 ist, wie auch aus Fig. 3 ersichtlich, konisch erweiternde ausgebildet, so dass der Aussendurchmesser D2 im Bereich des inneren Muffenendes grösser ist als der Aussendurchmesser $D1=2\times R1$ des Mittelbereiches 3, wobei deren Wandstärke S3 grösser ist als die Wandstärke S2 und ca. das 1,34 bis 1,4-fache der Wandstärke S1 beträgt.

Die beschriebene Ausbildung des Mittelbereiches 3 ergibt eine kontinuierliche Verstärkung der Wandung, welche sich dann im Verbindungsteil 10 zur Abzweigmuffe 2c weiter fortsetzt, so dass die Bereiche der höchsten Beanspruchung bei einer glatten Aussenkontur ohne sprunghafte Aenderungen der Wandstärke zielgerecht verstärkt sind.

Der Aussenumfang 11 der Muffen 2a, 2b ist jeweils ausgehend vom Aussendurchmesser D1 des Mittelbereiches 3 in Richtung des Einsteckendes 12 konisch verkleinernd ausgebildet. Bei der Abzweigmuffe 2c erfolgt die konische Verkleinerung ab dem mit dem grössten Durchmesser D2 versehenen Verbindungsteil 10. Jede Muffe 2a, 2b, 2c weist für das zu verbindende Rohr 15 mit dem Aussen- bzw. Nenndurchmesser d eine zylindrische Sitzpartie 13 auf, welche an ihrem inneren Ende mit einer Anschlagstirnfläche 14 versehen ist. Die zylindrische Sitzpartie 13 ist am Einsteckende 12 leicht konisch oder bogenförmig erweiternd ausgebildet, was das Einstecken der Rohre erleichtert.

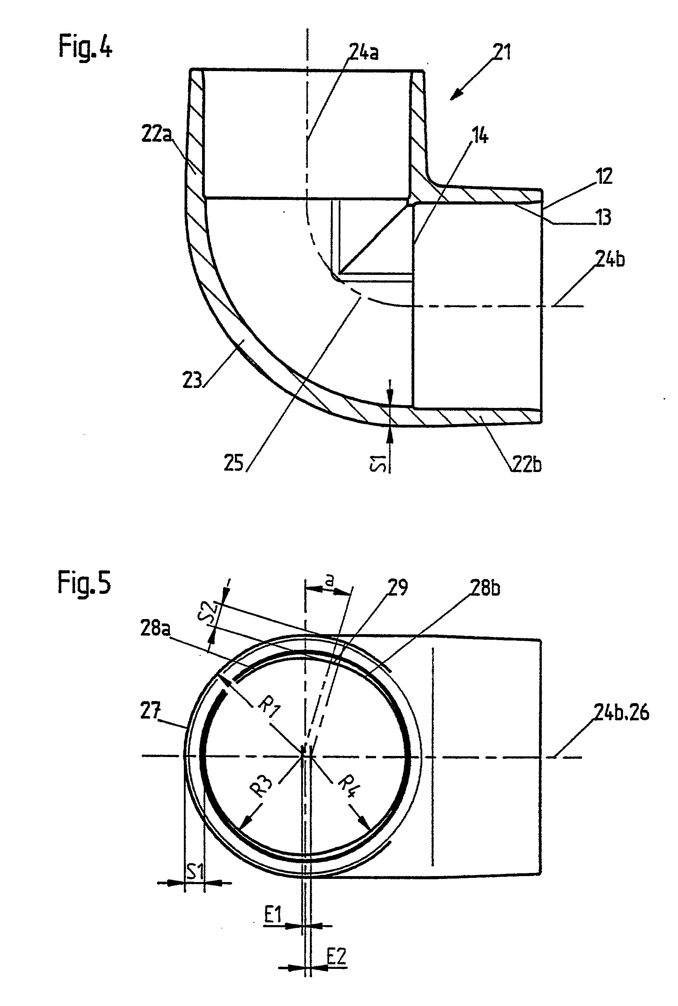

Die Fig. 4 und 5 zeigen ein Winkelstück 21 mit einem 90 Grad Winkel, wobei die entsprechende Ausbildung auch bei 45 Grad Winkeln Verwendung findet. Die Gestaltung der beiden Muffen 22a und 22b entspricht der bereits zum T-förmigen Anschlussstück 1 beschriebenen Muffen 2a und 2b.

Die beiden Muffenachsen 24a und 24b sind durch eine bogenförmige Mittellinie 25 des Mittelbereiches miteinander verbunden, wobei eine durch die Muffenachsen 24a, 24b und die Mittellinie 25 gehende Ebene mit 26 bezeichnet wird.

Die Aussenkontur 27 des Mittelbereiches 23 ist im Querschnitt kreisförmig mit einem Radius R1 ausgebildet, wobei der Radiusmittelpunkt auf der Mittellinie 25 liegt.

Die Innenkontur 28 weist zwei zur Aussenkontur exzentrisch angeordnete Innenkontur-Partien 28a, 28b auf, deren Radien R3 und R4 vorzugsweise jedoch unterschiedlich gross sind. Hierbei ist der nach aussen gerichtete Radius R3 geringfügig grösser. Die Radiusmittelpunkte liegen in der Ebene 26 beidseits der Mittellinie 25 mit unterschiedlichen Distanzen, wobei die Exzentrizität E1 des nach aussen gerichteten Radius R3 kleiner ist als die Exzentrizität E2 des Radius R4. Der umfangmässige Verlauf der Innenkontur-Partie 28a geht über den 180°-Winkel hinaus, wobei U=180°+2α ist. Beim 90° Winkel beträgt α ca. 15 bis 16° und beim 45° Winkel ist α=5 bis 6°.

Die grösste Wandstärke S2 ist jeweils am Uebergang zwischen der Innenkontur-Partie 28a zu der Innenkontur-Partie 28b wobei diese durch eine schmale ebene Verbindungsfläche 29 gebildet wird. Die Wandstärke S2 ist 1,18 bis 1,25 mal der kleinsten Wandstärke S1 im äusseren Bereich, wo die Wand des Mittelbereiches 23 von der Ebene 26 geschnitten wird.

Durch die beschriebene exzentrische Ausbildung der Innenkontur 28 wird der Mittelbereich des Winkels an dem am meisten gegen Ausbeulung beanspruchten Bereich verstärkt, was spritzgusstechnisch von wesentlicher Bedeutung ist.

Da die maximale erforderliche Wandstärke S2 höchstens das 1,3-fache der geringsten Wandstärke S1 des Mittelbereiches beträgt, und die Verstärkung kontinuierlich an der Innenkontur erfolgt, ist gegenüber den bisherigen Formteilausbildungen eine wesentliche Materialeinsparung gegeben, wobei eine gute spritzgusstechnische Gestaltung bei glatten Aussenflächen des Formteiles gewährleistet ist.

Das ermittelte Wandstärkenverhältnis wurde durch mathematische Berechnungen wie z.B. mittels der Finite-Elemente-Methode und durch Versuche bestimmt.

**Patentansprüche**

1. Rohrverbindungsteil aus Kunststoff für Fluiddruckleitungen in Form eines Abzweigstückes oder eines Winkelstückes, in dessen Muffen (2a, 2b, 2c, 22a, 22b) die Enden der zu verbindenden Rohre dicht einsetzbar sind, wobei zwischen den Muffen ein Mittelbereich (3, 23) mit einer im Querschnitt kreisförmigen Aussenkontur (7, 27) angeordnet ist, und die Innenkontur (8, 28) des Mittelbereiches zur Aussenkontur (7, 27) exzentrisch verläuft, so dass der Mittelbereich (3, 23) eine umfangmässig sich kontinuierlich verändernde Wandstärke aufweist, dadurch gekennzeichnet, dass die Innenkontur (8, 28) durch zwei zur Aussenkontur (7, 27) und zueinander exzentrisch verlaufende Innenkontur-Partien (8a, 8b, 28a, 28b) gebildet wird und dass die Mittelpunkte der Radien (R3, R4) der Innenkonturpartien (8a, 8b, 28a, 28b) beidseits des Mittelpunktes des Radius (R1) der Aussenkontur (7, 27) in einer durch alle Muffenachsen (4, 5, 24a, 24b) gehenden Ebene (6, 26) angeordnet sind, wobei die kleinsten Wandstärken (S1) jeweils in dieser Ebene liegen.

2. Rohrverbindungsteil nach Anspruch 1, dadurch gekennzeichnet, dass die grösste Wandstärke (S2) des Mittelbereiches (3, 23) das 1,18 bis 1,3-fache aufweist als deren kleinere Wandstärke (S1).

3. Rohrverbindungsteil, welches als T-Stück zum Verbinden von drei Rohren mit gleichem Aussendurchmesser ausgebildet ist, nach der Ansprüche 1 oder 2, dadurch gekennzeichnet, dass bei der abzweigenden Muffe (2c) am inneren Ende der Muffe (2c) der Aussendurchmesser (D2) grösser ist als der Aussendurchmesser (D1) des Mittelbereiches (3) und die Wandstärke (S3) grösser ist als die grösste Wandstärke (S2) des Mittelbereiches.

4. Rohrverbindungsteil nach Anspruch 3, dadurch gekennzeichnet, dass die Radien (R3, R4) der beiden Innenkontur-Partien (8a, 8b) gleich gross sind, aber unterschiedlich exzentrisch zur Aussenkontur (7) verlaufen, wobei der von der abzweigenden Muffe (2c) weiter entfernte, nach aussen angeordnete Radius (R3) mit einer grösseren Exzentrizität (E1) verläuft als der zur abzweigenden Muffe gerichtete Radius (R4).

5. Rohrverbindungsteil, welches als Winkel- oder Bogenteil (21) ausgebildet ist, nach einem der Ansprüche 1 oder 2, dadurch gekennzeichnet, dass der zum äusseren Bogen gerichtete Radius (R3) der Innenkontur-Partie (28a) grösser ist als der nach innen gerichtete Radius (R4), wobei die Exzentrizität (E1) des äusseren Radius (R3) kleiner ist als die Exzentrizität (E2) des inneren Radius (R4).

6. Rohrverbindungsteil nach Anspruch 5, dadurch gekennzeichnet, dass der umfangmässige Verlauf der durch den nach aussen gerichteten Radius (R3) gebildeten Innenkontur-Partie (28a) grösser ist als 180° und zwar bei einem 90°-Winkel 210 bis 215° und bei einem 45°-Winkel 190 bis 192° beträgt.

7. Rohrverbindungsteil nach einem der Ansprüche 1 bis 6, dadurch gekennzeichnet, dass die Aussenkontur jeder Muffe (2a, 2b, 2c, 22a, 22b) in Richtung des Einsteckendes (12) konisch verkleinernd ausgebildet ist und die Innenkontur eine Anschlagstirnfläche (14) und ein konisch oder bogenförmig sich erweiterndes Einsteckende (12) aufweist.

## Claims

1. Plastic pipe fitting for fluid pressure pipes in the form of a branch piece or an angle piece, with sleeves (2a, 2b, 2c, 22a, 22b) for sealed engagement of the ends of the pipes to be connected, where a centre section (3, 23) between the sleeves, with an outer contour (7, 27) with a circular cross-section and with an inner contour (8, 28) of the centre section running eccentrically with respect to the outer contour (7, 27) so that the centre section (3, 23) has a circumference with a continuously changing wall thickness, characterised in that the inner contour (8, 28) is formed by two inner contour sections (8a, 8b, 28a, 28b) running eccentrically with respect to the outer contour (7, 27) and to each other in that the centre points of the radii (R3, R4) of the inner contour sections (8a, 8b, 28a, 28b) are located on both sides of the centre point of the radius (R1) of the outer contour (7, 27) in a plane (6, 26) passing through all the axes (4, 5, 24a, 24b) of the sleeves, where the minimum wall thicknesses (S1) are in each case located in this plane.

2. Pipe fitting as in claim 1 characterised in that the maximum wall thickness (S2) of the centre section (3, 23) is 1.18–1.3 times its minimum wall thickness (S1).

3. Pipe fitting which is designed as T-piece for connecting 3 pipes with the same external diameter as in one of the claims 1 or 2, characterised in that the outer diameter (D2) at the branching off sleeve (2c) at the inner end of the sleeve (2c) is greater than the outer diameter (D1) of the centre section (3) and the wall thickness (S3) is greater than the maximum wall thickness (S2) of the centre section.

4. Pipe fitting as in claim 3, characterised in that the radii (R3, R4) of the two inner contour sections (8a, 8b) are of equal size, but have a different eccentricity with respect to the outer contour (7), where the radius (R3) located on the outside furthest away from the branching sleeve (2c) has a greater eccentricity (E1) than the radius (R4) directed towards the sleeve.

5. Pipe fitting designed as angle or arc section (21) as in one of the claims 1 or 2, characterised in that the radius (R3) of the inner contour part (28a) directed towards the outer arc is greater than the radius (R3) is smaller than the eccentricity (E2) of the inner radius (R4).

6. Pipe fitting as in claim 5, characterised in that the circumferential path of the inner contour section (28a) formed by the radius (R3) directed outwards is greater than 180 and in fact amounts to 210–215° for a 90° angle and to 190–192° for a 45° angle.

7. Pipe fitting as in one of the claims 1 to 6 inclusive, characterised in that the outer contour of each sleeve (2a, 2b, 2c, 22a, 22b) is designed tapering in the direction of the insertion end (12) and the inner contour is made with a stop phase (14) and an insertion end (12) widening outwards in the shape of a cone or arc.

## Revendications

1. Raccord en matière plastique pour tuyaux ou conduits de fluides sous pression, sous forme d'une pièce de dérivation ou d'un coude, dans les manchons (2a, 2b, 2c, 22a, 22b) duquel peuvent être mises en place, de façon étanche, les extrémités des tuyaux qui doivent être raccordés, une zone médiane (3, 23) comportant un contour extérieur (7, 27) de section transversale circulaire étant prévue entre les manchons, et dont le contour intérieur (8, 28) de la zone médiane est excentrique par rapport au contour extérieur (7, 27), de façon telle que la zone médiane (3, 23) présente une épaisseur de paroi variant continuellement dans le sens du pourtour, caractérisé en ce que le contour intérieur (8, 28) est formé par deux parties de contour intérieur (8a, 8b, 28a, 28b) qui ont un tracé excentrique par rapport au contour extérieur (7, 27) ainsi que l'une par rapport à l'autre, et en ce que le centre des cercles de rayons (R3, R4) des parties (8a, 8b, 28a, 28b) de contour intérieur est disposé des deux côtés du centre du cercle de rayon (R1) du contour extérieur (7, 27) dans un plan (6, 26) passant par tous les axes de manchon (4, 5, 24a, 24b), les plus faibles épaisseurs (S1) de paroi étant dans chaque cas situées dans ce plan.

2. Raccord pour tuyaux selon la revendication 1, caractérisé en ce que la plus forte épaisseur (S2) de paroi de la zone médiane (3, 23) représente 1,18 à 1,3 fois la plus faible épaisseur (S1) de paroi.

3. Raccord pour tuyaux conformé en T destiné à relier trois tubes de diamètre extérieur égal, selon l'une des revendications 1 ou 2, caractérisé en ce que, dans le manchon (2c) de dérivation, le diamètre extérieur (D2) à l'extrémité intérieure du manchon (2c) est plus élevé que le diamètre extérieur (D1) de la zone médiane (3) et en ce que l'épaisseur (S3) de paroi est plus forte que la plus forte épaisseur (S2) de paroi de la zone médiane.

4. Raccord pour tuyaux selon la revendication 3, caractérisé en ce que les cercles de rayons (R3, R4) des deux parties (8a, 8b) de contour intérieur sont égaux mais présentent une excentricité différente par rapport au contour extérieur (7), le cercle de rayon (R3) disposé vers l'extérieur, plus éloigné du manchon (2c) de dérivation a un tracé présentant une plus forte excentricité (E1) que le cercle de rayon (R4) dirigé vers le manchon de dérivation.

5. Raccord pour tuyaux conformé en pièce d'angle ou coude (21), selon une des revendications 1 ou 2, caractérisé en ce que le cercle de rayon (R3) dirigé vers la partie convexe extérieure de la partie (28a) de contour extérieur est plus grand que le cercle de rayon (R4) dirigé vers l'intérieur, l'excentricité (E1) du cercle de rayon extérieur (R3) est plus faible que l'excentricité (E2) du cercle de rayon intérieur (R4).

6. Raccord pour tuyaux selon la revendication 5, caractérisé en ce que l'extension du tracé du contour de la partie (28a) de contour intérieur formé par le cercle de rayon (R3) dirigé vers l'extérieur est supérieure à 180°, et ceci en s'élevant, dans le cas d'un coude de 90°, à une valeur de 210° à 215° et, dans le cas d'un coude de 45°, à une valeur de 190° à 192°.

7. Raccord pour tuyaux selon une des revendications 1 à 6, caractérisé en ce que le contour extérieur de chaque manchon (2a, 2b, 2c, 22a, 22b) présente un rétrécissement conique en direction de l'extrémité d'enfilage (12) et en ce que le contour intérieur présente une surface de butée frontale (14) et une extrémité (12) d'enfilage qui s'élargit de façon conique ou de façon courbe.

Fig.1

Fig.2

Fig.3

Fig.4

Fig.5